# EUROPEAN PATENT APPLICATION

(11) **EP 4 844 819 A1**
(43) Date of publication of application: **25.11.2026**
(21) Application number: 26179229.5
(22) Date of filing: 18.05.2026
(51) Int. Cl.: H01M 4/13, H01M 4/04, H01M 4/66, H01M 4/70, H01M 4/139, H01M 10/052, H01M 10/058, H01M 10/0525

(54) **ELECTRODE ASSEMBLY**

(30) Priority: 19.05.2025 KR 20250064311
(71) Applicant: SAMSUNG SDI CO., LTD., Yongin-si, Gyeonggi-do 17084 (KR)
(72) Inventor: LEE, Wonhyung, Yongin-si, Gyeonggi-do 17084 (KR); KIM, Junyoung, Yongin-si, Gyeonggi-do 17084 (KR)
(74) Representative: Michalski Hüttermann & Partner mbB

(57) **Abstract**

The present disclosure relates to an electrode assembly. The electrode assembly includes a positive electrode layer including a positive electrode current collector layer and a positive electrode active material layer on the positive electrode current collector layer, a negative electrode layer including a negative electrode current collector layer and a negative electrode active material layer on the negative electrode current collector layer, an ion conductive layer being disposed between the positive electrode current collector layer and the negative electrode current collector layer, a first channel extending from the positive electrode current collector layer into the ion conductive layer, and a second channel extending from the negative electrode current collector layer into the ion conductive layer. The positive electrode active material layer fills the first channel, and the negative electrode active material layer fills the second channel.

## Description

### CROSS-REFERENCE TO RELATED APPLICATION

This application claims priority to Korean Patent Application No. 10-2025-0064311 filed on May 19, 2025 in the Korean Intellectual Property Office.

### BACKGROUND

One or more example embodiments of the present disclosure relate to an electrode assembly, and a method for manufacturing an electrode assembly, and for example, to an electrode assembly and a method for manufacturing an electrode assembly that increases the conductivity of lithium ions that move between a positive electrode and a negative electrode.

With increasing presence of electronic devices using batteries such as, e.g., mobile phones, laptop computers, electric vehicles, and the like, the demand for rechargeable batteries with high energy density and high capacity has been increasing. Accordingly, improving the performance of rechargeable lithium batteries may be advantageous.

A rechargeable lithium battery includes a positive electrode and a negative electrode, both containing an active material capable of intercalation and deintercalation of lithium ions, and an electrolyte. The rechargeable lithium battery produces electrical energy by oxidation and reduction reactions when lithium ions are intercalated into or deintercalated from the positive electrode and the negative electrode.

In a rechargeable lithium battery, lithium ions can move between a positive electrode and a negative electrode by passing through a separator during charging and discharging. If (when) the conductivity of lithium ions is increased, the output performance of the rechargeable lithium battery can be improved.

### SUMMARY

One or more aspects of embodiments of the present disclosure are directed toward an electrode assembly and an electrode assembly manufacturing method that increases the conductivity of lithium ions moving between the positive electrode and the negative electrode.

According to one or more example embodiments of the present disclosure, an electrode assembly includes a positive electrode layer including a positive electrode current collector layer and a positive electrode active material layer on the positive electrode current collector layer, a negative electrode layer including a negative electrode current collector layer and a negative electrode active material layer on the negative electrode current collector layer, an ion conductive layer disposed between the positive electrode current collector layer and the negative electrode current collector layer, a first channel extending through the positive electrode current collector layer to the ion conductive layer, and a second channel extending through the negative electrode current collector layer to the ion conductive layer. The positive electrode active material layer fills the first channel, and the negative electrode active material layer fills the second channel.

According to one or more example embodiments of the present disclosure, an electrode assembly manufacturing method includes forming a positive electrode current collector layer on a first surface of an ion conductive layer, forming a negative electrode current collector layer on a second surface of the ion conductive layer, forming a first channel extending from the positive electrode current collector layer to the ion conductive layer, forming a second channel extending from the negative electrode current collector layer to the ion conductive layer, forming a positive electrode active material layer on the positive electrode current collector layer and the first channel, and forming a negative electrode active material layer on the negative electrode current collector layer and the second channel. The positive electrode active material layer is formed to fill the first channel, and the negative electrode active material layer is formed to fill the second channel.

### BRIEF DESCRIPTION OF DRAWINGS

FIG. 1 is a conceptual diagram schematically illustrating a rechargeable battery according to example embodiments of the present disclosure.
FIG. 2 to FIG. 5 are schematic diagrams illustrating a rechargeable battery according to an example embodiment, where FIG. 2 shows a cylindrical type, FIG. 3 shows a prismatic type, and FIG. 4 and FIG. 5 show pouch-type battery forms.
FIG. 6 is a perspective view illustrating an example embodiment in which channel portions are regularly arranged in an intermediate electrode assembly according to example embodiments of the present disclosure.
FIG. 7 is a perspective view illustrating an example embodiment in which channel portions are irregularly arranged in an intermediate electrode assembly according to example embodiments of the present disclosure.
FIG. 8 to FIG. 12 are cross-sectional views illustrating various example embodiments of channel portions in an intermediate electrode assembly according to example embodiments of the present disclosure, taken along line A-A' disclosed in FIG. 6.
FIG. 13 is a cross-sectional view illustrating the B-B' portion disclosed in FIG. 7.
FIG. 14 is a cross-sectional view illustrating a state in which a plurality of electrode assemblies are disposed on both sides of a separator with the separator interposed therebetween according to example embodiments of the present disclosure.
FIG. 15 is a perspective view illustrating one example embodiment of a groove portion in an intermediate electrode assembly according to example embodiments of the present disclosure.
FIG. 16 is a perspective view illustrating another example embodiment of a groove portion in an intermediate electrode assembly according to example embodiments of the present disclosure.
FIG. 17 is a cross-sectional view illustrating the C-C' portion disclosed in FIG. 16.
FIG. 18 is a process flowchart illustrating one example embodiment of an electrode assembly manufacturing method according to example embodiments of the present disclosure.
FIG. 19A to FIG. 19C are drawings illustrating the electrode assembly manufacturing method disclosed in FIG. 18 in process sequence order.
FIG. 20 is a process flowchart illustrating another example embodiment of the electrode assembly manufacturing method according to example embodiments of the present disclosure.
FIG. 21A to FIG. 21D are drawings illustrating the electrode assembly manufacturing method disclosed in FIG. 20 in process sequence order.

### DETAILED DESCRIPTION

In order to fully understand the configuration and effects of the present disclosure, example embodiments of the present disclosure are described with reference to the accompanying drawings. However, the present disclosure is not limited to the example embodiments disclosed below, but may be implemented in various forms and various changes may be made. These example embodiments are provided to ensure that the disclosure of the present disclosure is complete and to fully inform those of ordinary skill in the art to which the present disclosure belongs of the scope of the disclosure.

In this specification, when a component is referred to as being "on" another component, it means that the component may be formed directly on the other component, or that a third component may be interposed therebetween. In addition, in the drawings, the thickness of components may be exaggerated for effective description of technical content. Throughout the specification, parts indicated by the same reference numerals represent the same components.

The example embodiments described in this specification are explained with reference to cross-sectional views, plan views, and/or perspective views, which are ideal example views of the present disclosure. In various example embodiments of this specification, terms such as first, second, third, and the like, describe various components, but these components should not be limited by such terms. These terms are used merely to distinguish one component from another component. The example embodiments described and illustrated herein also include complementary example embodiments thereof.

The terminology used herein is for the purpose of describing example embodiments, and is not intended to limit the present disclosure. In this specification, the singular forms include the plural forms as well, unless the context clearly indicates otherwise. The terms "comprises" and/or "comprising" used in the specification do not exclude the presence or addition of one or more other components in addition to the stated components.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

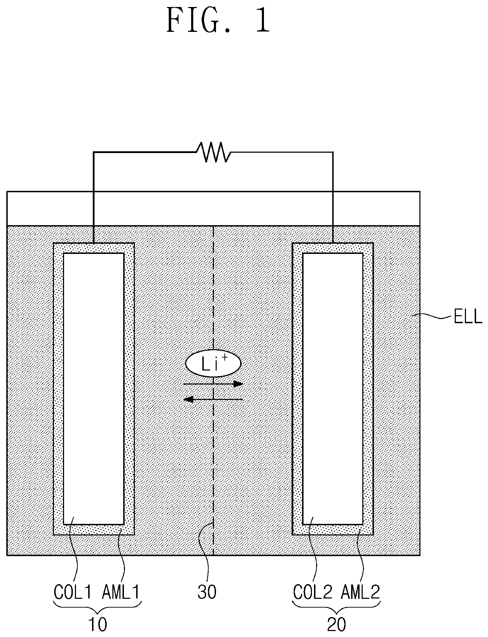

FIG. 1 is a cross-sectional view of a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode

The positive electrode 10 for a rechargeable lithium battery may include a current collector COL1 and a positive electrode active material layer AML1 on the current collector. The positive electrode active material layer AML1 may include a positive electrode active material, and may further include a binder and/or a conductive material (e.g., an electrically conductive material).

For example, the positive electrode 10 may further include an additive that can constitute a sacrificial positive electrode.

An amount of the positive electrode active material may be in a range of about 90 wt% to about 99.5 wt% based on 100 wt% of the positive electrode active material layer AML1. Amounts of each of the binder and the conductive material may independently be in a range of about 0.5 wt% to about 5 wt%, respectively, based on 100 wt% of the positive electrode active material layer AML1.

The binder attaches the positive electrode active material particles to each other, and also attaches the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause a chemical change (e.g., does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector COL1, but the current collector COL1 is not limited thereto.

### Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

The positive electrode active material may be or include, for example, a high nickel-based positive electrode active material having a nickel content greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

### Negative Electrode

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include a range of about 90 wt% to about 99 wt% of the negative electrode active material, a range of about 0.5 wt% to about 5 wt% of the binder, and a range of about 0 wt% to about 5 wt% of the conductive material.

The binder may attach the negative electrode active material particles to each other, and may also attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause a chemical change (e.g., does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

### Negative Electrode Active Material

The negative electrode active material in the negative electrode active material layer AML2 includes at least one of a material capable of reversibly intercalating/deintercalating lithium ions, lithium metal, an alloy of lithium metal, a material capable of doping and dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one or more of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Electrolyte

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

### Rechargeable Lithium Battery

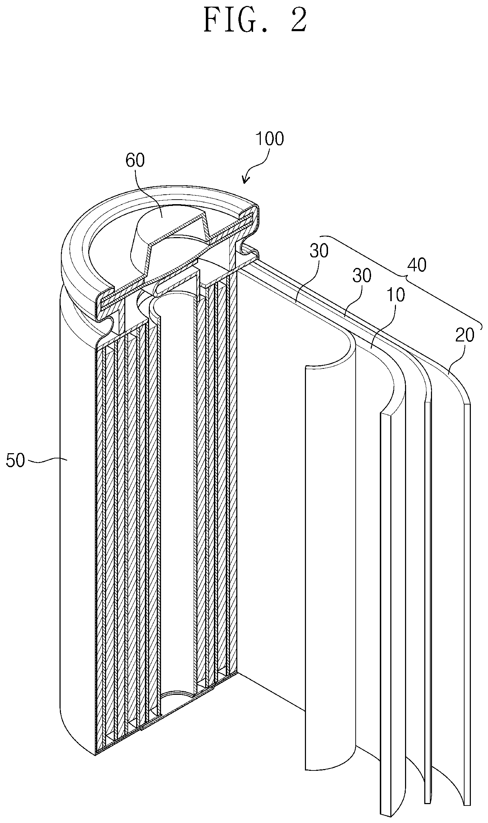

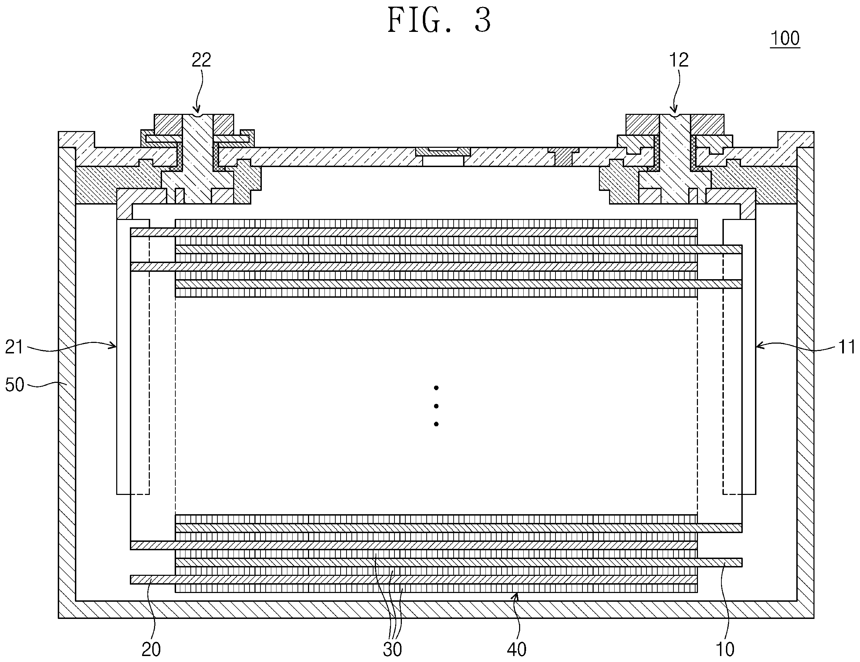

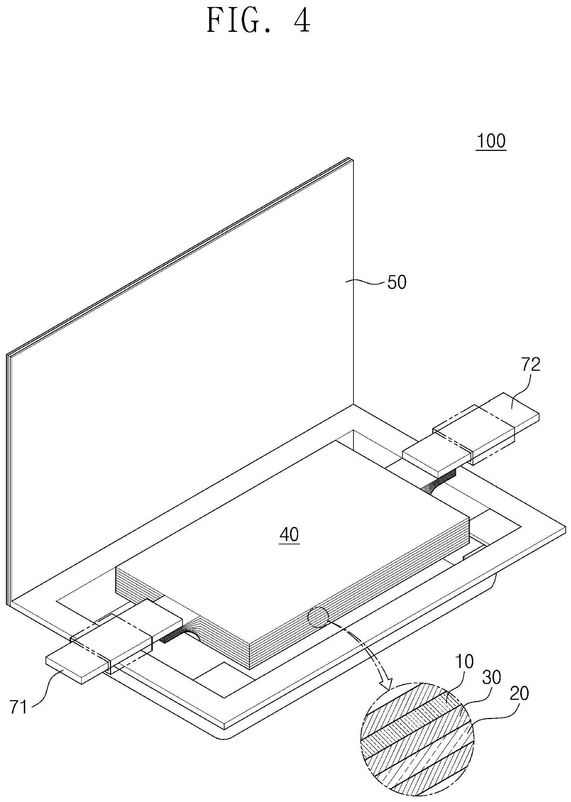

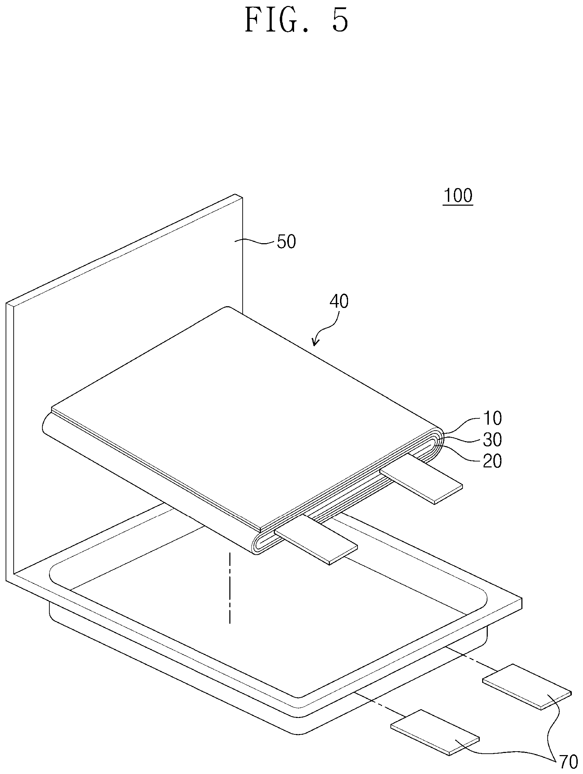

The rechargeable lithium battery may be classified into cylindrical, prismatic, pouch, or coin-type batteries, and the like depending on their shape. FIG. 2 to FIG. 5 are schematic views illustrating a rechargeable lithium battery according to an example embodiment. FIG. 2 shows a cylindrical battery, FIG. 3 shows a prismatic battery, and FIG. 4 and FIG. 5 show pouch-type batteries. Referring to FIG. 2 to FIG. 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 4 and FIG. 5, the rechargeable lithium battery 100 may include an electrode tab 70 illustrated in FIG. 5, or for example, a positive electrode tab 71 and a negative electrode tab 72 illustrated in FIG. 4, the electrode tabs 70/71/72 forming an electrical path for inducing the current formed in the electrode assembly 40 to the outside of the rechargeable lithium battery 100.

The rechargeable lithium battery according to an example embodiment may be applicable to, e .g., automobiles, mobile phones, and/or various types of electric devices, as non-limiting examples.

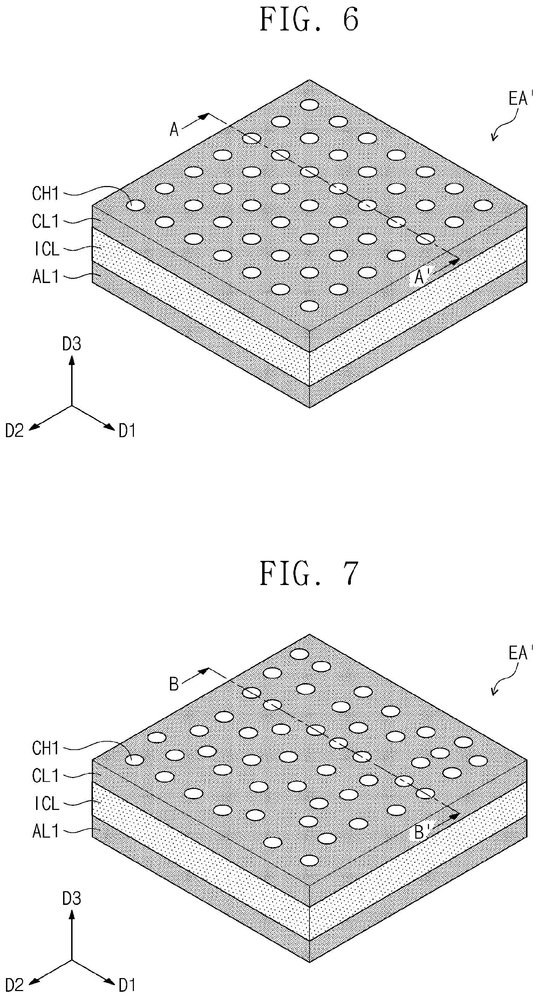

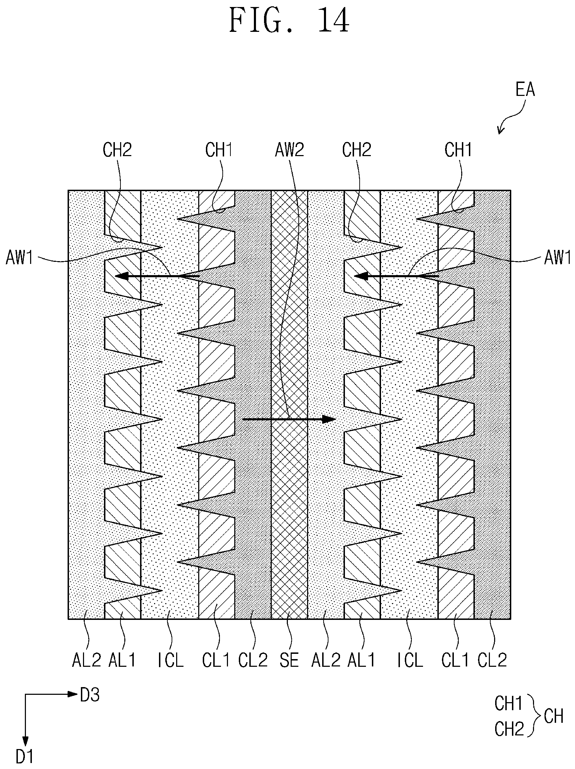

Referring to FIG. 6 to FIG. 13, an intermediate electrode assembly EA' according to an example embodiment of the present disclosure is shown, in which the positive electrode active material layer CL2 and the negative electrode active material layer AL2 have not yet been applied and the first channel CH1 and the second channel CH2 are unfilled. The finished electrode assembly EA, in which the first channel CH1 and the second channel CH2 are filled with the positive electrode active material layer CL2 and the negative electrode active material layer AL2 respectively, is shown in FIG. 14, 19C or 21D. The intermediate electrode assembly EA' may include a positive electrode layer CL, a negative electrode layer AL, an ion conductive layer ICL, and a channel portion CH.

In the following description, a first direction D1 and a second direction D2 refer to directions parallel to the positive electrode layer CL and the negative electrode layer AL, wherein the first direction D1 and the second direction D2 are perpendicular to each other. A third direction D3 refers to a direction perpendicular to the positive electrode layer CL and the negative electrode layer AL, corresponding to the stacking direction of the electrode assembly EA.

The positive electrode layer CL may include a positive electrode current collector layer CL1 and a positive electrode active material layer CL2. The positive electrode current collector layer CL1 may be configured to include the same or similar components as the current collector COL1 discussed above with respect to FIG. 1. The positive electrode current collector layer CL1 may be made of or include a metal material. For example, the positive electrode current collector layer CL1 may include Al, but is not limited thereto.

Based on a third direction D3, the thickness range of the positive electrode current collector layer CL1 may be in a range of about 1 t µm o about 2 µm, but is not limited thereto.

The positive electrode active material layer CL2 may be coated on the positive electrode current collector layer CL1. The positive electrode active material layer CL2 may be configured to include the same or similar components as the positive electrode active material layer AML1 shown in FIG. 1.

The negative electrode layer AL may include a negative electrode current collector layer AL1 and a negative electrode active material layer AL2. The negative electrode current collector layer AL1 may be configured to include the same or similar components as the current collector COL2 shown in FIG. 1. The negative electrode current collector layer AL1 may be made of or include a metal material. For example, the negative electrode current collector layer AL1 may be or include at least one of copper foil, nickel foil, stainless steel foil, titanium foil, nickel foam, copper foam, a polymer substrate coated with a conductive metal, and combinations thereof, but is not limited thereto.

Based on the third direction D3, the thickness range of the negative electrode current collector layer AL1 may be in a range of about 1 µm to about 2 µm, but is not limited thereto. The negative electrode active material layer AL2 may be coated on the negative electrode current collector layer AL1. The negative electrode active material layer AL2 may be configured to include the same or similar components as the negative electrode active material layer AML2 shown in FIG. 1.

The ion conductive layer ICL may be disposed between the positive electrode current collector layer CL1 and the negative electrode current collector layer AL1. In an example embodiment of the present disclosure, the ion conductive layer ICL may include an ion conductive film. For example, the ion conductive film may be or include at least one of a conductive polymer film, a ceramic ion conductive film, a polymer electrolyte film, a solid electrolyte film, an ion exchange resin film, or the like. Most suitably, the ion conductive layer ICL may be or include a polymer electrolyte film. Based on the third direction D3, the thickness range of the ion conductive layer ICL may be in a range of about 5 µm to about 20 µm, but is not limited thereto.

The positive electrode current collector layer CL1 may be formed on one surface of the ion conductive layer ICL, and the negative electrode current collector layer AL1 may be formed on the opposite surface of the ion conductive layer ICL.

The process of forming the positive electrode current collector layer CL1 and the negative electrode current collector layer AL1 on the ion conductive layer ICL may involve, e.g., a thermal evaporation method, a sputtering method, an E-beam evaporation method, an electroplating method, or the like.

For example, since the positive electrode current collector CL1 and the negative electrode current collector AL1, which are metal substrates, are formed on both sides of the ion conductive layer ICL by the aforementioned process such as thermal evaporation, the overall thickness of the metal substrate in the electrode assembly EA can be thin. This can increase the processability of the channel portion CH and reduce the weight of the rechargeable lithium battery.

The channel portion CH may be disposed in connection between the positive electrode current collector layer CL1, the negative electrode current collector layer AL1, and the ion conductive layer ICL. Lithium ions may pass through the positive electrode current collector layer CL1, the negative electrode current collector layer AL1, and the ion conductive layer ICL through the channel portion CH, and can move between the positive electrode active material layer CL2 and the negative electrode active material layer AL2.

The channel portion CH may include a first channel CH1 and a second channel CH2.

The first channel CH1 may extend through the positive electrode current collector layer CL1 into the ion conductive layer ICL. When the positive electrode active material layer CL2 is coated on the positive electrode current collector layer CL1, the positive electrode active material layer CL2 may fill the first channel CH1.

The second channel CH2 may extend through the negative electrode current collector layer AL1 into the ion conductive layer ICL. When the negative electrode active material layer AL2 is coated on the negative electrode current collector layer AL1, the negative electrode active material layer AL2 may fill the second channel CH2.

According to this structure, lithium ions may move between the ion conductive layer ICL and the positive electrode active material layer CL2 through the first channel CH1. Additionally, lithium ions may move between the ion conductive layer ICL and the negative electrode active material layer AL2 through the second channel CH2.

In an example embodiment of the present disclosure, each of, or at least one of, the first channel CH1 and the second channel CH2 may have a hole shape.

Furthermore, the first channel CH1 and the second channel CH2 may be formed so as not to penetrate the ion conductive layer ICL.

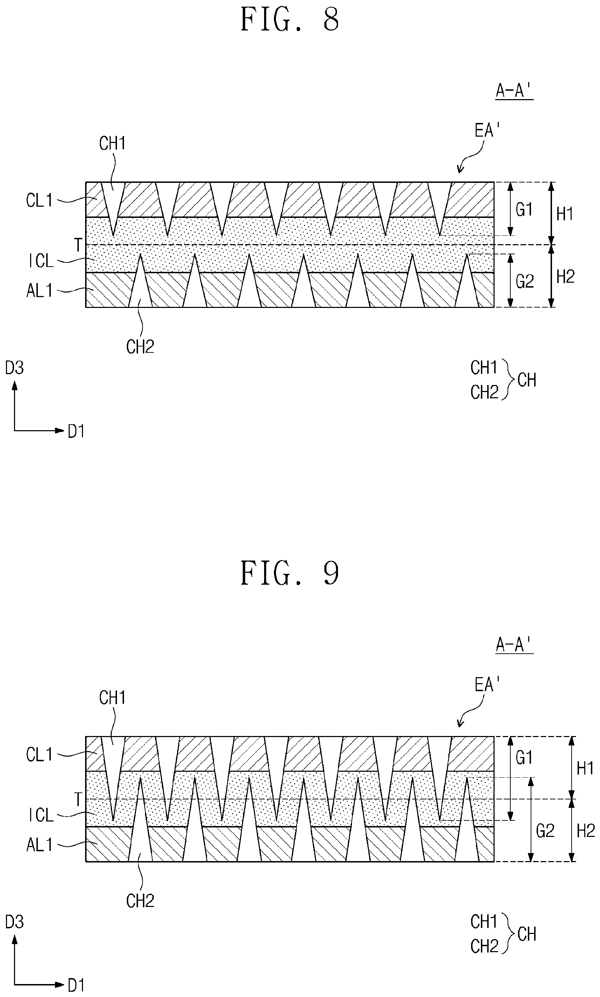

Various example embodiments of the channel portion CH are described below with reference to FIG. 8 to FIG. 13.

FIG. 6 and FIG. 8 disclose one example embodiment of the channel portion CH. Referring to FIG. 6 and FIG. 8, one example embodiment of the channel portion CH may have a generally conical shape. Accordingly, the channel portion CH may have a triangular cross-section.

The first channel CH1 may have a shape that narrows in width from the positive electrode active material layer CL2 toward the ion conductive layer ICL.

The second channel CH2 may have a shape that narrows in width from the negative electrode active material layer AL2 toward the ion conductive layer ICL.

And, Based on the third direction D3, the length G1 of the first channel CH1 may be smaller than the distance H1 from the surface of the positive electrode active material layer CL2 to the center line T of the ion conductive layer ICL. Hereinafter, the distance H1 may also be referred to as the length H1.

Additionally, the length G2 of the second channel CH2 may be smaller than the distance H2 from the surface of the negative electrode active material layer AL2 to the center line T of the ion conductive layer ICL. Hereinafter, the distance H2 may also be referred to as the length H2.

In other words, since each of the first channel CH1 and the second channel CH2 has a hole shape, the hole may be formed inside the ion conductive layer ICL without exceeding the center line T of the ion conductive layer ICL.

Referring to FIG. 6, the first channel CH1 may include a plurality of first channels CH1. The plurality of first channels CH1 may be regularly arranged on the positive electrode current collector layer CL1.

Additionally, the second channel CH2 may include a plurality of second channels CH2. The plurality of second channels CH2 may be regularly arranged on the negative electrode current collector layer AL1.

Furthermore, based on the third direction D3, the first channel CH1 and the second channel CH2 may be offset from each other. In other words, the plurality of first channels CH1 and the plurality of second channels CH2 may be disposed at staggered positions based on the third direction D3.

Through this arrangement structure, it is possible to hinder or prevent the first channel CH1 and the second channel CH2 from communicating with each other inside the ion conductive layer ICL. If (when) the first channel CH1 and the second channel CH2 communicate, the positive electrode active material layer CL2 filling the first channel CH1 and the negative electrode active material layer AL2 filling the second channel CH2 may come into direct contact. In this case, the rechargeable battery may catch fire due to a short circuit, and output performance may decrease.

In one example embodiment of the channel portion CH, the first channel CH1 and the second channel CH2 are formed not to cross the center line T of the ion conductive layer ICL, and the first channel CH1 and the second channel CH2 are arranged to be offset from each other, thereby reducing the possibility of communication between the first channel CH1 and the second channel CH2. This reduces or prevents contact between the positive electrode active material layer CL2 and the negative electrode active material layer AL2.

FIG. 6 and FIG. 9 disclose another example embodiment of the channel portion CH. Referring to FIG. 6 and FIG. 9, another example embodiment of the channel portion CH may have a generally conical shape. Accordingly, the channel portion CH may have a triangular cross-section.

The first channel CH1 may have a shape that narrows in width from the positive electrode active material layer CL2 toward the ion conductive layer ICL.

The second channel CH2 may have a shape that narrows in width from the negative electrode active material layer AL2 toward the ion conductive layer ICL.

Referring to FIG. 6, the first channel CH1 may include a plurality of first channels CH1. The plurality of first channels CH1 may be regularly arranged on the positive electrode current collector layer CL1.

The second channel CH2 may include a plurality of second channels CH2. The plurality of second channels CH2 may be regularly arranged on the positive electrode current collector layer CL1.

Furthermore, based on the third direction D3, the first channel CH1 and the second channel CH2 may be offset from each other. That is, the plurality of first channels CH1 and the plurality of second channels CH2 may be disposed at staggered positions based on the third direction D3.

In another example embodiment of the channel portion CH, based on the third direction D3, the length G1 of the first channel CH1 may be larger than the length H1 from the surface of the positive electrode active material layer CL2 to the center line T of the ion conductive layer ICL.

The length G2 of the second channel CH2 may be larger than the length H2 from the surface of the negative electrode active material layer AL2 to the center line T of the ion conductive layer ICL.

In other words, since each of the first channel CH1 and the second channel CH2 has a hole shape, the hole may be formed inside the ion conductive layer ICL crossing the center line T of the ion conductive layer ICL.

As illustrated in FIG. 9, since the first channel CH1 and the second channel CH2 are arranged to be offset from each other, contact between the positive electrode active material layer CL2 and the negative electrode active material layer AL2 can be reduced or prevented even if (when) the first channel CH1 and the second channel CH2 extend beyond the center line T of the ion conductive layer ICL.

Furthermore, since each of the first channel CH1 and the second channel CH2 is longer inside the ion conductive layer ICL, the conductivity of lithium ions can be further increased.

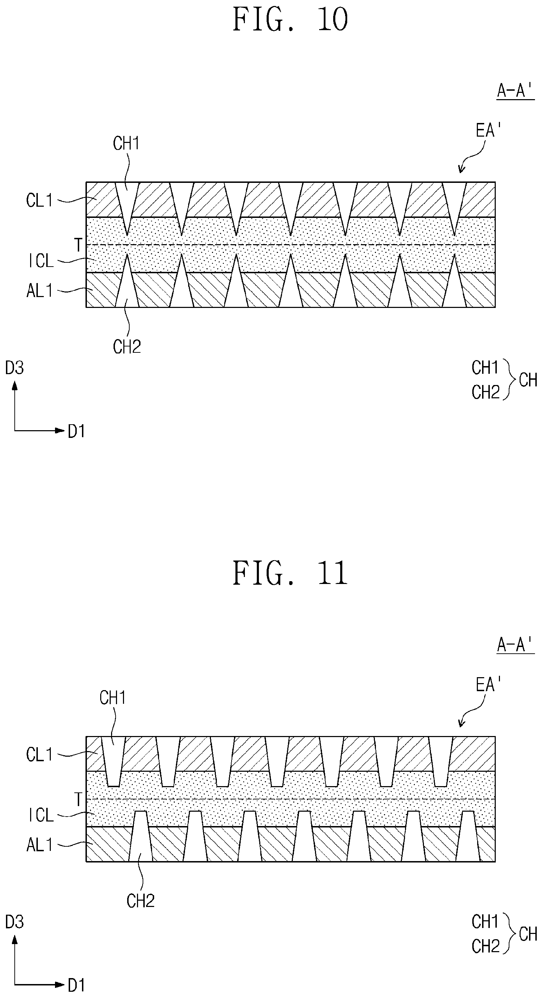

FIG. 6 and FIG. 10 illustrate yet another example embodiment of the channel portion CH. Referring to FIG. 6 and FIG. 10, yet another example embodiment of the channel portion CH may have a generally conical shape. Accordingly, the channel portion CH may have a triangular cross-section.

The first channel CH1 may have a shape that narrows in width from the positive electrode active material layer CL2 toward the ion conductive layer ICL.

The second channel CH2 may have a shape that narrows in width from the negative electrode active material layer AL2 toward the ion conductive layer ICL.

Furthermore, based on the third direction D3, identical to the example embodiment disclosed in FIG. 8, the length G1 of the first channel CH1 may be smaller than the length H1 from the surface of the positive electrode active material layer CL2 to the center line T of the ion conductive layer ICL.

The length G2 of the second channel CH2 may be smaller than the length H2 from the surface of the negative electrode active material layer AL2 to the center line T of the ion conductive layer ICL.

In other words, since each of the first channel CH1 and the second channel CH2 has a hole shape, the hole can be processed inside the ion conductive layer ICL without exceeding the center line T.

Referring to FIG. 6, the first channel CH1 may include a plurality of first channels CH1. The plurality of first channels CH1 may be regularly arranged on the positive electrode current collector layer CL1.

The second channel CH2 may include a plurality of second channels CH2. The plurality of second channels CH2 may be regularly arranged on the positive electrode current collector layer CL1.

In another example embodiment of the channel portion CH, based on the third direction D3, the first channel CH1 and the second channel CH2 may be aligned with each other. In other words, the plurality of first channels CH1 and the plurality of second channels CH2 may be disposed at the same positions based on the third direction D3, as illustrated in FIG. 10.

In another example embodiment of the channel portion CH, even if (when) the first channel CH1 and the second channel CH2 are disposed at the same positions based on the third direction D3, the first channel CH1 and the second channel CH2 do not extend beyond the center line T of the ion conductive layer ICL, so that contact between the positive electrode active material layer CL2 filling the first channel CH1 and the negative electrode active material layer AL2 filling the second channel CH2 can be avoided or blocked.

FIG. 6, FIG. 11, and FIG. 12 illustrate yet other example embodiments of the channel portion CH. Referring to FIG. 11, in yet another example embodiment of the channel portion CH, the first channel CH1 may have a trapezoidal cross-sectional shape narrowing from the positive electrode active material layer CL2 toward the ion conductive layer ICL. And, the second channel CH2 may have a trapezoidal cross-sectional shape narrowing from the negative electrode active material layer AL2 toward the ion conductive layer ICL.

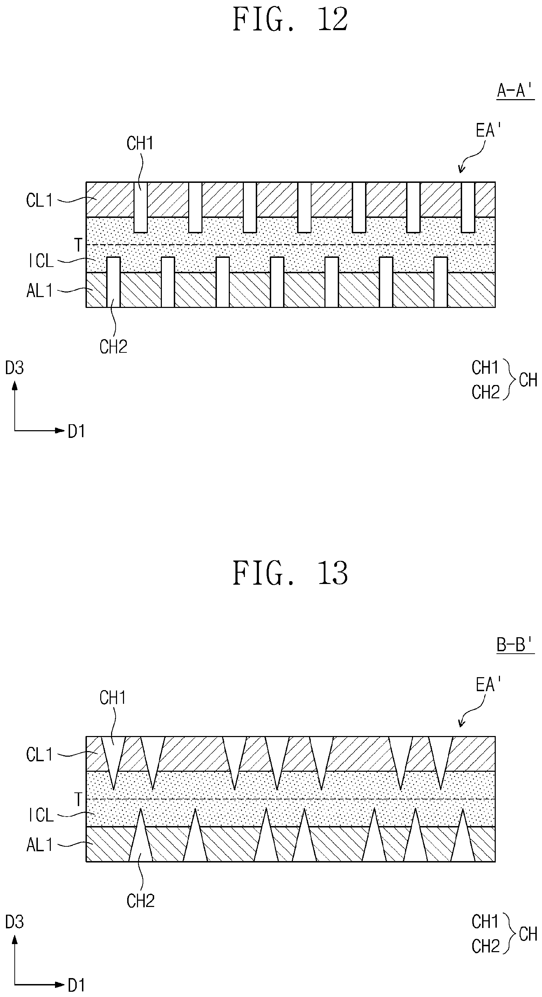

Referring to FIG. 12, yet another example embodiment of the channel portion CH may have a cylindrical shape. Accordingly, the cross-sectional shape of the channel portion CH may have a rectangular cross-sectional shape.

That is, the shape of the channel portion CH may further include a trapezoidal cross-sectional shape, a rectangular cross-sectional shape, and the like, in addition to the triangular shape disclosed in FIG. 8.

Based on the third direction D3, identical to the example embodiment disclosed in FIG. 8, the length G1 of the first channel CH1 may be smaller than the length H1 from the surface of the positive electrode active material layer CL2 to the center line T of the ion conductive layer ICL.

The length G2 of the second channel CH2 may be smaller than the length H2 from the surface of the negative electrode active material layer AL2 to the center line T of the ion conductive layer ICL.

In other words, since each of the first channel CH1 and the second channel CH2 has a hole shape, the hole may be formed inside the ion conductive layer ICL without exceeding the center line T of the ion conductive layer ICL.

Referring to FIG. 6, the first channel CH1 may include a plurality of first channels CH1. The plurality of first channels CH1 may be regularly arranged on the positive electrode current collector layer CL1.

The second channel CH2 may include a plurality of second channels CH2. The plurality of second channels CH2 may be regularly arranged on the positive electrode current collector layer CL1.

In another example embodiment of the channel portion CH, based on the third direction D3, the first channel CH1 and the second channel CH2 may be offset from each other. That is, the plurality of first channels CH1 and the plurality of second channels CH2 may be disposed at staggered positions based on the third direction D3.

In addition, in another example embodiment of the channel portion CH, the first channel CH1 and the second channel CH2 are formed not to cross the center line T of the ion conductive layer ICL, and the first channel CH1 and the second channel CH2 are arranged to be offset from each other, thereby reducing the possibility of communication between the first channel CH1 and the second channel CH2. This prevents contact between the positive electrode active material layer CL2 and the negative electrode active material layer AL2.

FIG. 7 and FIG. 13 disclose yet another example embodiment of the channel portion CH. Referring to FIG. 7 and FIG. 13, the channel portion CH may be irregularly arranged on the positive electrode current collector layer CL1 and the negative electrode current collector layer AL1.

For example, the first channel CH1 may include a plurality of first channels CH1. The plurality of first channels CH1 may be irregularly arranged on the positive electrode current collector layer CL1. The second channel CH2 may include a plurality of second channels CH2. The plurality of second channels CH2 may be irregularly arranged on the positive electrode current collector layer CL1.

At this time, based on the third direction D3, the length G1 of the first channel CH1 may be smaller than the length H1 from the surface of the positive electrode active material layer CL2 to the center line T of the ion conductive layer ICL.

The length G2 of the second channel CH2 may be smaller than the length H2 from the surface of the negative electrode active material layer AL2 to the center line T of the ion conductive layer ICL.

Since each of the first channel CH1 and the second channel CH2 has a hole shape, the hole may be formed inside the ion conductive layer ICL without crossing the center line T of the ion conductive layer ICL.

According to the above structure, even if (when) the plurality of first channels CH1 and the plurality of second channels CH2 are disposed at the same positions or staggered positions based on the third direction D3, the plurality of first channels CH1 and the plurality of second channels CH2 may not communicate with each other. This reduces or prevents contact between the positive electrode active material layer CL2 and the negative electrode active material layer AL2.

FIG. 14 discloses a state in which a plurality of electrode assemblies EA are disposed on both sides of a separator SE, with the separator SE interposed therebetween according to example embodiments of the present disclosure.

Referring to FIG. 14, the negative electrode active material layer AL2 may contact one side of the separator SE, and the positive electrode active material layer CL2 may contact the other side of the separator. Although not shown, the electrode assembly EA and the separator SE may be housed with an electrolyte inside a pouch or inside a prismatic case to constitute a rechargeable lithium battery.

During operation (or discharge) of the rechargeable lithium battery, lithium ions may move from the positive electrode active material layer CL2 through the separator SE to the negative electrode active material layer AL2, as indicated by arrow AW2. Simultaneously or contemporaneously, lithium ions may move from the positive electrode active material layer CL2 through the ion conductive layer ICL to the negative electrode active material layer AL2, as indicated by arrow AW1.

Since the first channel CH1 penetrates the positive electrode current collector layer CL1 and is formed up to the ion conductive layer ICL, lithium ions can pass through the positive electrode current collector layer CL1. That is, lithium ions can stably move from the positive electrode active material layer CL2 to the ion conductive layer ICL through the first channel CH1.

In addition, since the second channel CH2 penetrates the negative electrode current collector layer AL1 and is formed up to the ion conductive layer ICL, lithium ions can penetrate the negative electrode current collector layer AL1. That is, lithium ions can stably move from the ion conductive layer ICL to the negative electrode active material layer AL2 through the second channel CH2.

Accordingly, the amount of lithium ions moving from the positive electrode active material layer CL2 to the negative electrode active material layer AL2 can be increased, and since multiple movement paths are formed, the output performance of the rechargeable lithium battery can be improved.

During charging of the rechargeable lithium battery, lithium ions can move in the opposite direction. For example, lithium ions pass through the separator SE and move from the negative electrode active material layer AL2 to the positive electrode active material layer CL2.

In addition, lithium ions can travel from the negative electrode active material layer AL2 through the ion conductive layer ICL through the first channel CH1 and second channel CH2 to the positive electrode active material layer CL2.

Since multiple lithium ion movement paths are formed, the charging performance of the rechargeable lithium battery can be improved.

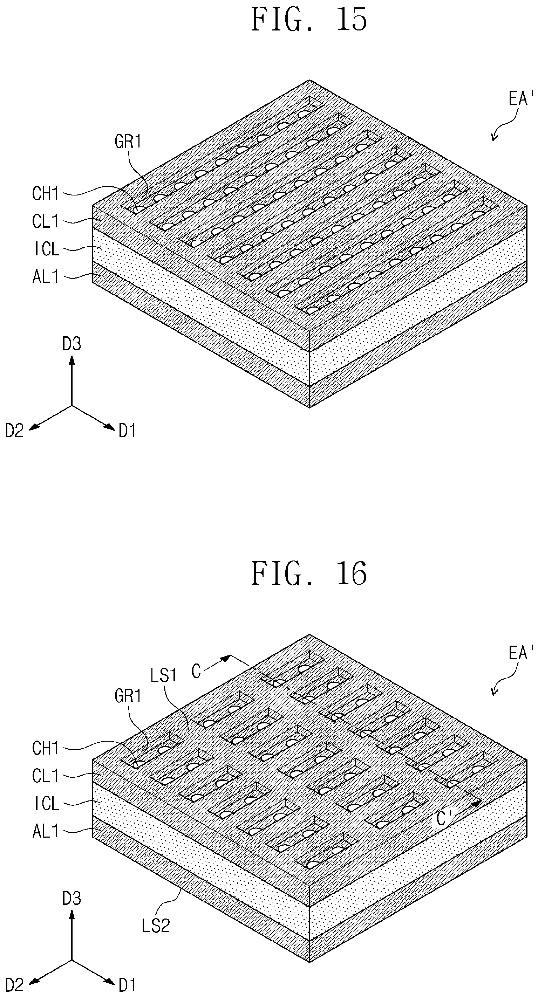

FIG. 15 illustrates one example embodiment of the groove portion GR in the intermediate electrode assembly EA' according to example embodiments of the present disclosure.

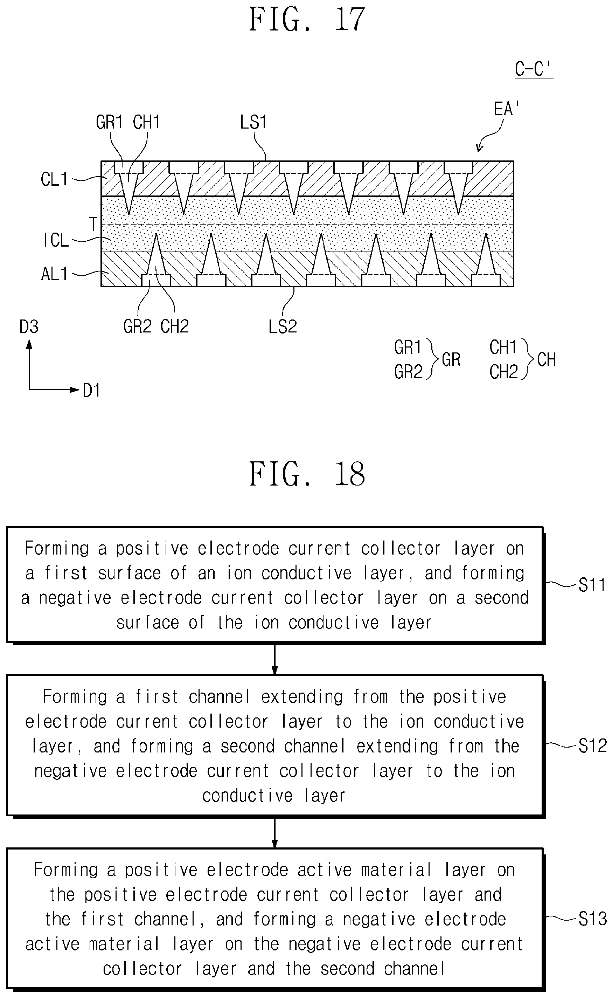

Referring to FIG. 15, one example embodiment of the groove portion GR may be formed by being recessed inwardly in each of the positive electrode current collector layer CL1 and the negative electrode current collector layer AL1. For example, the groove portion GR may include a first groove GR1 and a second groove GR2. (Here, since the second groove GR2 is the same as the form disclosed in FIG. 17, reference is made to FIG. 17.)

The first groove GR1 may be formed by being recessed from a surface of the positive electrode current collector layer CL1 toward an inner direction of the positive electrode current collector layer CL1.

In an example embodiment of the present disclosure, a first channel CH1 may be formed in the first groove GR1.

The first groove GR1 extends in a second direction D2 on the positive electrode current collector layer CL1 and may be formed in a linear shape.

The first groove GR1 may include a plurality of first grooves GR1. The plurality of first grooves GR1 may be disposed on the positive electrode current collector layer CL1 along a first direction D1 at predetermined or desired intervals.

The second groove GR2 may be formed by being recessed from a surface of the negative electrode current collector layer AL1 toward an inner direction of the negative electrode current collector layer AL1.

In an example embodiment of the present disclosure, a second channel CH2 may be formed in the second groove GR2.

The second groove GR2 extends in the second direction D2 on the negative electrode current collector layer AL1 and may be formed in a linear shape.

The second groove GR2 may include a plurality of second grooves GR2. The plurality of second grooves GR2 may be arranged at predetermined or desired intervals along the first direction D1 on the negative electrode current collector layer AL1.

The first groove GR1 and the first channel CH1 may be filled with the positive electrode active material layer CL2, and the second groove GR2 and the second channel CH2 may be filled with the negative electrode active material layer AL2.

Unlike the example embodiment of the channel portion CH disclosed in FIG. 6 and FIG. 8, as the first groove GR1 and the second groove GR2 are further formed, the amount of the positive electrode active material layer CL2 coated on the positive electrode current collector layer CL1 increases, and as the amount of the negative electrode active material layer AL2 coated on the negative electrode current collector layer AL1 increases, the capacity of the rechargeable lithium battery may be increased. This may contribute to improving the output performance of the rechargeable lithium battery.

FIG. 16 and FIG. 17 illustrate another example embodiment of the groove portion GR in the intermediate electrode assembly EA' according to example embodiments of the present disclosure.

Referring to FIG. 16, another example embodiment of the groove portion GR may be formed in a lattice structure in each of the positive electrode current collector layer CL1 and the negative electrode current collector layer AL1.

For example, the groove portion GR may include a first groove GR1 and a second groove GR2. The first groove GR1 may include a plurality of first grooves GR1. The plurality of first grooves GR1 may be arranged on the positive electrode current collector layer CL1 along a first direction D1 and a second direction D2 to form a plurality of rows, respectively.

Thus, a first lattice structure portion LS1 can be formed between the plurality of first grooves GR1 on the positive electrode current collector.

Furthermore, in an example embodiment of the present disclosure, a first channel CH1 may be formed in each first groove GR1.

The second groove GR2 may include a plurality of second grooves GR2. The plurality of second grooves GR2 may be arranged on the negative electrode current collector layer AL1 along the first direction D1 and the second direction D2 to form a plurality of rows, respectively.

Thus, a second lattice structure portion LS2 can be formed between the plurality of second grooves GR2 on the negative electrode current collector. Although not shown, the second lattice structure portion LS2 has the same shape as the first lattice structure portion LS1.

Furthermore, in an example embodiment of the present disclosure, a second channel CH2 may be formed in each second groove GR2.

The first groove GR1 and first channel CH1 can be filled with the positive electrode active material layer CL2, and the second groove GR2 and second channel CH2 can be filled with the negative electrode active material layer AL2.

Unlike the example embodiment of the channel portion CH disclosed in FIG. 6 and FIG. 8, as the first groove GR1 and the second groove GR2 are further formed, the positive electrode active material layer CL2 coated on the positive electrode current collector layer CL1 increases, and as the negative electrode active material layer AL2 coated on the negative electrode current collector layer AL1 increases, the capacity of the rechargeable lithium battery can be increased. This may contribute to improving the output performance of the rechargeable lithium battery.

In addition, as the first lattice structure portion LS1 is formed on the positive electrode current collector layer CL1 and the second lattice structure portion LS2 is formed on the negative electrode current collector layer AL1, the deterioration of rigidity of the positive electrode current collector layer CL1 and the negative electrode current collector layer AL1 can be alleviated.

The electrode assembly EA according to the example embodiment of the present disclosure can improve the output performance of the rechargeable lithium battery by increasing the conductivity of lithium ions between the positive electrode active material layer CL2 and the negative electrode active material layer AL2 through the various example embodiments described above.

Hereinafter, an electrode assembly manufacturing method according to an example embodiment of the present disclosure is described.

FIG. 18 to FIG. 19C disclose one example embodiment of an electrode assembly manufacturing method according to example embodiments of the present disclosure.

Referring to FIG. 18, one example embodiment of the electrode assembly manufacturing method may include forming a positive electrode current collector layer CL1 on a first face ICL1 of an ion conductive layer ICL, forming a negative electrode current collector layer AL1 on a second face ICL2 of the ion conductive layer ICL, forming a first channel CH1 extending from the positive electrode current collector layer CL1 to the ion conductive layer ICL, forming a second channel CH2 extending from the negative electrode current collector layer AL1 to the ion conductive layer ICL, forming a positive electrode active material layer CL2 on the positive electrode current collector layer CL1 and the first channel CH1, and forming a negative electrode active material layer AL2 on the negative electrode current collector layer AL1 and the second channel CH2.

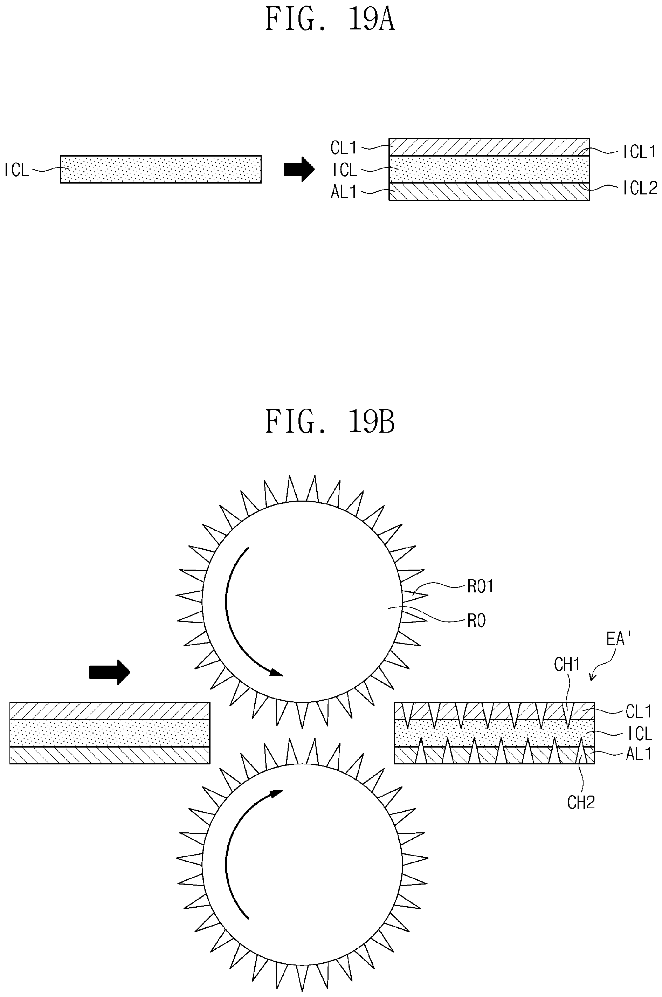

The step of forming the positive electrode current collector layer CL1 on the first face ICL1 of the ion conductive layer ICL and forming the negative electrode current collector layer AL1 on the second face ICL2 of the ion conductive layer ICL (S11), referring to FIG. 19A, can involve depositing the positive electrode current collector layer CL1 on the first face ICL1 of the ion conductive layer ICL. The negative electrode current collector layer AL1 can be deposited on the second face ICL2 of the ion conductive layer ICL. The ion conductive layer ICL may include a first face ICL1 and a second face ICL2. The first face ICL1 and the second face ICL2 may be opposite to each other. Therefore, the positive electrode current collector layer CL1 and the negative electrode current collector layer AL1 may be disposed with the ion conductive layer ICL therebetween.

Here, the positive electrode current collector layer CL1 may be deposited on the first face ICL1 of the ion conductive layer ICL as a pre-process, and then the negative electrode current collector layer AL1 may be deposited on the second face ICL2 of the ion conductive layer ICL as a post-process. Alternatively, the negative electrode current collector layer AL1 may be deposited on the second face ICL2 as a pre-process, and then the positive electrode current collector layer CL1 may be deposited on the first face ICL1 as a post-process. Alternatively, depositing the positive electrode current collector layer CL1 on the first face ICL1 and depositing the negative electrode current collector layer AL1 on the second face ICL2 may be performed simultaneously or contemporaneously.

The step of forming the first channel CH1 extending from the positive electrode current collector layer CL1 to the ion conductive layer ICL and forming the second channel CH2 extending from the negative electrode current collector layer AL1 to the ion conductive layer ICL (S12), referring to FIG. 19B, can involve a pair of forming rollers RO provided on manufacturing equipment, and a plurality of forming protrusions RO1 may be disposed on an outer circumferential surface of the forming roller RO. The forming roller RO may be rotated in an arrow direction by power means. The ion conductive layer ICL, the positive electrode current collector layer CL1, and the negative electrode current collector layer AL1 may be fed between the pair of forming rollers RO in the arrow direction.

The forming protrusion RO1 of the forming roller RO disposed at an upper portion may form the first channel CH1 in the positive electrode current collector layer CL1 and the ion conductive layer ICL. Accordingly, the first channel CH1 may be formed in a shape extending from the positive electrode current collector layer CL1 into the ion conductive layer ICL. The forming protrusion RO1 of the forming roller RO disposed at a lower portion may form the second channel CH2 in the negative electrode current collector layer AL1 and the ion conductive layer ICL. Accordingly, the second channel CH2 may be formed in a shape extending from the negative electrode current collector layer AL1 into the ion conductive layer ICL.

The above-mentioned process using the forming roller RO is only one example for forming the first channel CH1 and the second channel CH2. Therefore, other processes that can form the first channel CH1 and the second channel CH2 are also possible. For example, a press device may be provided on the manufacturing equipment, and a plurality of forming protrusions may be disposed on a forming plate of the press device. A process in which a hydraulic cylinder moves the forming plate, and the forming plate presses the ion conductive layer ICL, the positive electrode current collector layer CL1, and the negative electrode current collector layer AL1 to form the first channel CH1 and the second channel CH2 is also possible. As other examples, the first channel CH1 and the second channel CH2 can be formed using a laser process, a high-pressure fluid injection process, or the like.

The step of forming the positive electrode active material layer CL2 on the positive electrode current collector layer CL1 and the first channel CH1 and forming the negative electrode active material layer AL2 on the negative electrode current collector layer AL1 and the second channel CH2 (S13), referring to 19C, involves coating the positive electrode active material layer CL2 on the positive electrode current collector. The positive electrode active material layer CL2 may be coated filling the first channel CH1, and the negative electrode active material layer AL2 may be coated on the negative electrode current collector. The negative electrode active material layer AL2 may be coated filling the second channel CH2.

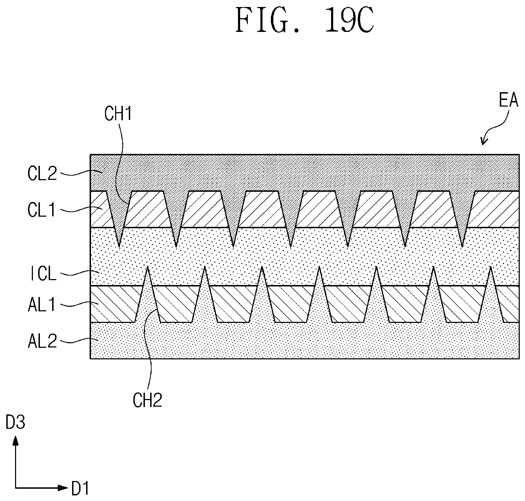

Referring to FIG. 19C, in the electrode assembly EA according to an example embodiment of the present disclosure, as the first channel CH1 and the second channel CH2 extend to the interior of the ion conductive layer ICL, lithium ions can move more smoothly between the positive electrode active material layer CL2 and the negative electrode active material layer AL2 during operation of the rechargeable lithium battery. This can improve the output performance of the rechargeable lithium battery.

Here, the positive electrode active material layer CL2 may be coated on the positive electrode current collector layer CL1 and the first channel CH1 in a pre-process, and then the negative electrode active material layer AL2 may be coated on the negative electrode current collector layer AL1 and the second channel CH2 in a post-process. Conversely, the negative electrode active material layer AL2 may be coated on the negative electrode current collector layer AL1 and the second channel CH2 in a pre-process, and then the positive electrode active material layer CL2 may be coated on the positive electrode current collector layer CL1 and the first channel CH1 in a post-process. Alternatively, forming the positive electrode active material layer CL2 and forming the negative electrode active material layer AL2 may be performed simultaneously or contemporaneously.

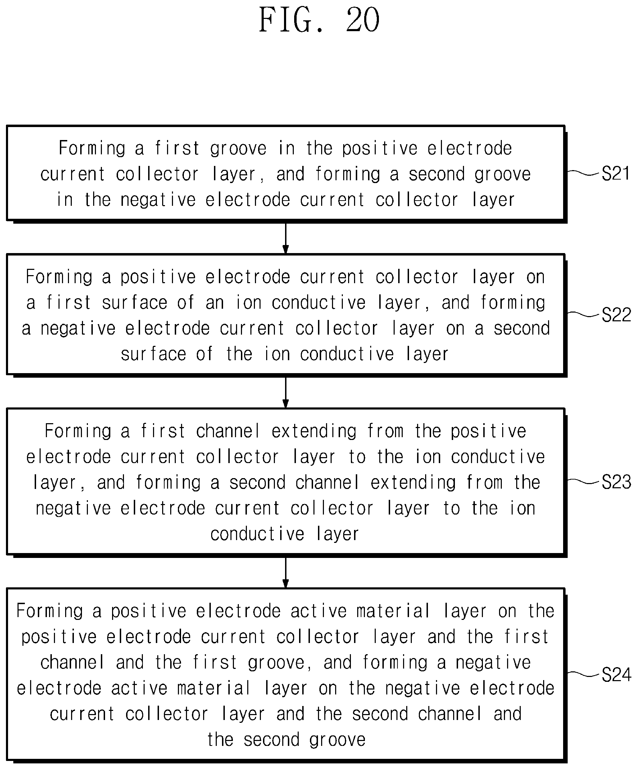

FIG. 20 to FIG. 21D disclose another example embodiment of the electrode assembly manufacturing method according to example embodiments of the present disclosure.

Referring to FIG. 20, another example embodiment of the electrode assembly manufacturing method may include forming a first groove GR1 in the positive electrode current collector layer CL1, forming a second groove GR2 in the negative electrode current collector layer AL1, forming the positive electrode current collector layer CL1 on the first face ICL1 of the ion conductive layer ICL, forming the negative electrode current collector layer AL1 on the second face ICL2 of the ion conductive layer ICL, forming a first channel CH1 extending from the positive electrode current collector layer CL1 into the ion conductive layer ICL, forming a second channel CH2 extending from the negative electrode current collector layer AL1 into the ion conductive layer ICL, forming a positive electrode active material layer CL2 on the positive electrode current collector layer CL1 and the first channel CH1, and forming a negative electrode active material layer AL2 on the negative electrode current collector layer AL1 and the second channel CH2.

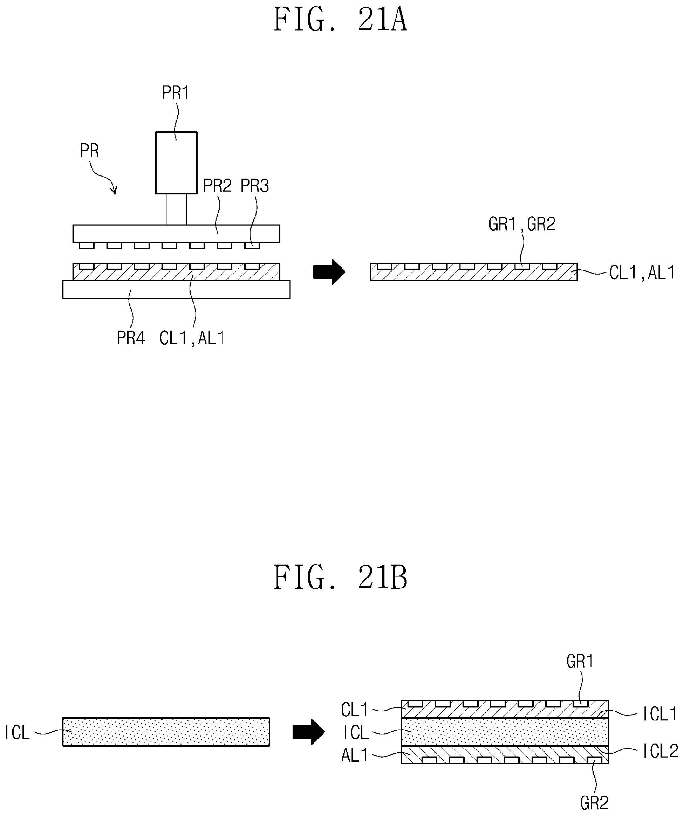

The step of forming the first groove GR1 in the positive electrode current collector layer CL1 and the step of forming the second groove GR2 in the negative electrode current collector layer AL1 (S21), referring to FIG. 21A, can involve a press device PR provided on manufacturing equipment, and the press device PR may include a hydraulic cylinder PR1, a forming plate PR2 moved by the hydraulic cylinder PR1, a forming protrusion PR3 formed on the forming plate PR2, and a die PR4.

The positive electrode current collector layer CL1 can be seated on the die PR4. The hydraulic cylinder PR1 can be driven to move the forming plate PR2 in the direction of the positive electrode current collector layer CL1. The forming protrusion PR3 of the forming plate PR2 can press the positive electrode current collector layer CL1 to form the first groove GR1.

Similarly, the negative electrode current collector layer AL1 can be seated on the die PR4. The hydraulic cylinder PR1 can be driven to move the forming plate PR2 in the direction of the negative electrode current collector layer AL1. The forming protrusion PR3 of the forming plate PR2 can press the negative electrode current collector layer AL1 to form the second groove GR2.

The above-mentioned process using the press device PR is only one example for forming the first groove GR1 and the second groove GR2. Therefore, other processes capable of forming the first groove GR1 and the second groove GR2 are also possible. For example, a process of forming the first groove GR1 and the second groove GR2 by passing through a forming roller having forming protrusions formed thereon is also possible.

Forming the first groove GR1 and forming the second groove GR2 can be carried out simultaneously or contemporaneously through separate production lines.

The step of forming the positive electrode current collector layer CL1 on the first face ICL1 and forming the negative electrode current collector layer AL1 on the second face ICL2 (S22), referring to FIG. 21B, can involve depositing the positive electrode current collector layer CL1 on the first face ICL1. The negative electrode current collector layer AL1 can be deposited on the second face ICL2. The positive electrode current collector layer CL1 and the negative electrode current collector layer AL1 may be disposed with the ion conductive layer ICL therebetween.

Here, the positive electrode current collector layer CL1 may be deposited on the first face ICL1 of the ion conductive layer ICL as a pre-process, and then the negative electrode current collector layer AL1 may be deposited on the second face ICL2 of the ion conductive layer ICL as a post-process. Alternatively, the negative electrode current collector layer AL1 may be deposited on the second face ICL2 as a pre-process, and then the positive electrode current collector layer CL1 may be deposited on the first face ICL1 as a post-process. Alternatively, depositing the positive electrode current collector layer CL1 on the first face ICL1 and depositing the negative electrode current collector layer AL1 on the second face ICL2 may be performed simultaneously or contemporaneously.

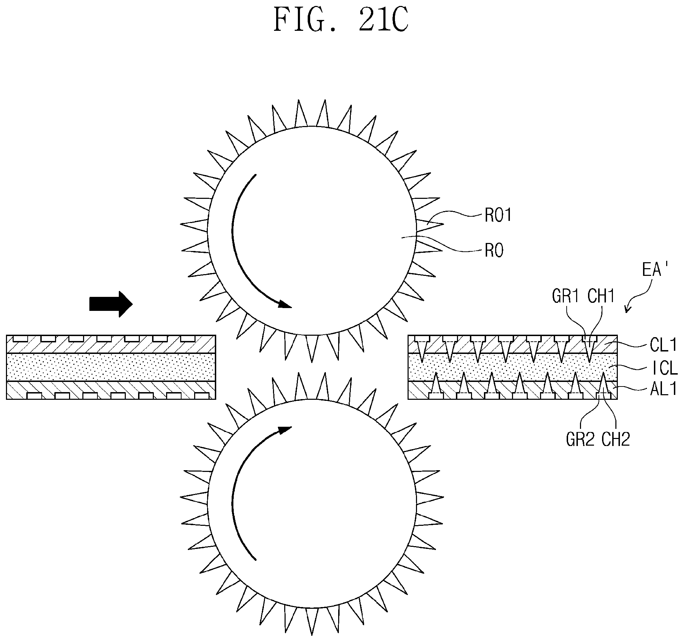

The step of forming the first channel CH1 extending from the positive electrode current collector layer CL1 into the ion conductive layer ICL and forming the second channel CH2 extending from the negative electrode current collector layer AL1 into the ion conductive layer ICL (S23), referring to FIG. 21C, a pair of forming rollers RO may be provided on manufacturing equipment, and a plurality of forming protrusions RO1 may be disposed on an outer circumferential surface of the forming roller RO.

The forming protrusion RO1 of the forming roller RO disposed at the top can form the first channel CH1 in the positive electrode current collector layer CL1 and the ion conductive layer ICL. For example, the first channel CH1 can be formed inside the first groove GR1. Accordingly, the first channel CH1 can be formed in a shape extending from the positive electrode current collector layer CL1 into the ion conductive layer ICL.

The forming protrusion RO1 of the forming roller RO disposed at the bottom can form the second channel CH2 in the negative electrode current collector layer AL1 and the ion conductive layer ICL. At this time, the second channel CH2 can be formed inside the second groove GR2. Accordingly, the second channel CH2 can be formed in a shape extending from the negative electrode current collector layer AL1 into the ion conductive layer ICL.

The above-mentioned process using the forming roller RO is only one example. Other processes like a press device, laser process, or high-pressure fluid injection are possible.

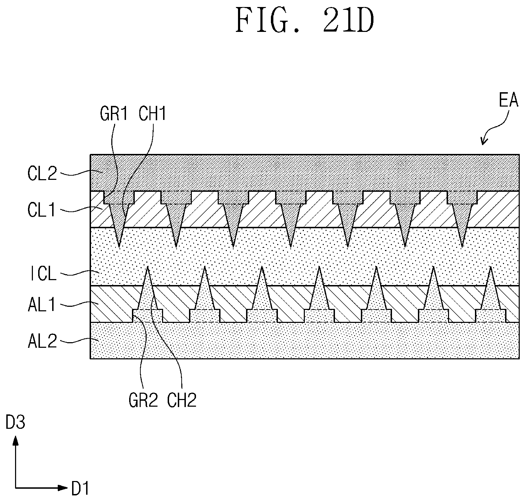

The step of forming the positive electrode active material layer CL2 on the positive electrode current collector layer CL1 and the first channel CH1 and forming the negative electrode active material layer AL2 on the negative electrode current collector layer AL1 and the second channel CH2 (S24), referring to FIG. 21D, can coat the positive electrode active material layer CL2 on the positive electrode current collector. The positive electrode active material layer CL2 can be coated while filling the first groove GR1 and the first channel CH1. And the negative electrode active material layer AL2 can be coated on the negative electrode current collector. The negative electrode active material layer AL2 can be coated while filling the second groove GR2 and the second channel CH2.

Here, the positive electrode active material layer CL2 may be coated on the positive electrode current collector layer CL1 and the first channel CH1 and the first groove GR1 in a pre-process, and then the negative electrode active material layer AL2 may be coated on the negative electrode current collector layer AL1 and the second channel CH2 and the second groove GR2 in a post-process. Conversely, the negative electrode active material layer AL2 may be coated on the negative electrode current collector layer AL1 and the second channel CH2 and the second groove GR2 in a pre-process, and then the positive electrode active material layer CL2 may be coated on the positive electrode current collector layer CL1 and the first channel CH1 and the first groove GR1 in a post-process. Alternatively, forming the positive electrode active material layer CL2 and forming the negative electrode active material layer AL2 may be performed simultaneously or contemporaneously.

Referring to FIG. 21D, in the electrode assembly EA according to an example embodiment of the present disclosure, as the first channel CH1 and the second channel CH2 are formed and extend into the ion conductive layer ICL, lithium ions can move more smoothly between the active material layers, improving output performance.

Table 1 below shows experimental results comparing SOC (State Of Charge) performance under various conditions such as presence of an ion conductive layer ICL, presence of channels (corresponding to channel portion CH), channel length (µm), and number of channels per unit area (N/cm²).

**Table 1:**

| Classification | Presence of ion conductive layer | Presence of channels | Channel length (µm) | Number of channels per unit area (N/cm²) | Performance (SOC @4C (%)) |
|---|---|---|---|---|---|
| Comparative example | X | X | - | - | 33% |
| Experimental example 1 | O | O | 5 | 20 | 58% |
| Experimental example 2 | O | O | 10 | 20 | 67% |
| Experimental example 3 | O | O | 15 | 20 | 72% |
| Experimental example 4 | O | O | 10 | 10 | 60% |
| Experimental example 5 | O | O | 10 | 20 | 67% |
| Experimental example 6 | O | O | 10 | 30 | 75% |

In the experimental conditions of Table 1, the positive electrode current collector used AL material with a thickness of 2 µm, and the negative electrode current collector used CU material with a thickness of 2 µm.

The ion conductive layer ICL used PEF (Polymer Electrolyte Film) material with a thickness of 20 µm and an ion conductivity of 0.2 to 1 mS/cm. Here, mS is milli-Siemens, a unit for ion conductivity. In Table 1, the unit for SOC performance, SOC (State Of Charge) @4C (%), represents the performance (%) of full charging or full discharging within 15 minutes.

For example, if (when) SOC @4C (%) = 50% in Table 1, this means that when charging at 4C rate, the battery was 50% charged by the measurement point. In this experiment, the battery SOC performance was set to SOC @4C. The measurement point is 5 minutes after charging or discharging.

Referring to Table 1, the comparative example refers to a conventional electrode assembly. The comparative example is an electrode assembly without an ion conductive layer ICL and channel portions CH. For the conventional electrode assembly, the SOC performance was 33%. That is, when charged at 4C rate, the battery was 33% charged by the measurement point (5 minutes later).

Experimental Examples 1 to 6 are electrode assemblies EA having an ion conductive layer ICL and channel portions CH.

In Experimental Examples 1 to 3, the SOC performance according to the channel length (µm) was measured with the number of channels per unit area fixed at 20 (N/cm²). In Experimental Example 1, the length was set to 5 µm, and SOC performance was 58%. In Experimental Example 2, the length was 10 µm, and SOC performance was 67%. In Experimental Example 3, the length was 15 µm, and SOC performance was 72%. It can be seen that as the channel length increases, SOC performance improves. However, the maximum length can only be set within a range that does not penetrate the ion conductive layer ICL.

In Experimental Examples 4 to 6, the SOC performance was measured according to the number of channels per unit area (N/cm²) with the channel length fixed at 10 µm. In Experimental Example 4, the number was set to 10, and SOC performance was 60%. In Experimental Example 5, the number was 20, and SOC performance was 67%. In Experimental Example 6, the number was 30, and SOC performance was 75%. It can be seen that as the number of channels per unit area increases, SOC performance improves.

In summary, the electrode assembly EA with the ion conductive layer ICL and channel portions CH has better SOC performance, and the performance improves as the channel length and number of channels per unit area increase.

The electrode assembly and the electrode assembly manufacturing method according to the present disclosure can increase the conductivity of lithium ions moving between the positive electrode and the negative electrode during charging and discharging of a rechargeable lithium battery.

In addition, since a positive electrode current collector and a negative electrode current collector, which are metal substrates, are formed on both surfaces of the ion conductive layer by a process such as thermal deposition, the thickness of the metal substrates can be thin. This can increase the processability of the hole-shaped channel portions and reduce the weight of the rechargeable lithium battery. Ultimately, the output performance of the rechargeable lithium battery can be improved.

While example embodiments of the present disclosure are described, the present disclosure is not limited thereto, and various modifications are possible within the scope of the claims, detailed description, and drawings.

## Claims

1. An electrode assembly (EA) comprising:
a positive electrode layer (CL) comprising a positive electrode current collector layer (CL1) and a positive electrode active material layer (CL2) on the positive electrode current collector layer (CL1);
a negative electrode layer (AL) comprising a negative electrode current collector layer (AL1) and a negative electrode active material layer (AL2) on the negative electrode current collector layer (AL1);
an ion conductive layer (ICL) disposed between the positive electrode current collector layer (CL1) and the negative electrode current collector layer (AL1);
a first channel (CH1) extending through the positive electrode current collector layer (CL1) to the ion conductive layer (ICL) and preferably into the ion conductive layer (ICL); and
a second channel (CH2) extending through the negative electrode current collector layer (AL1) to the ion conductive layer (ICL) and preferably into the ion conductive layer (ICL),
wherein the positive electrode active material layer (CL2) fills the first channel (CH1), and the negative electrode active material layer (AL2) fills the second channel (CH2).

2. The electrode assembly (EA) according to claim 1, wherein
the first channel (CH1) is configured such that lithium ions can move through the first channel (CH1) between the ion conductive layer (ICL) and the positive electrode active material layer (CL2), and/or
the second channel (CH2) is configured such that lithium ions can move through the second channel (CH2) between the ion conductive layer (ICL) and the negative electrode active material layer (AL2).

3. The electrode assembly (EA) according to any of the previous claims, wherein the first channel (CH1) is obtained by introducing a hole in the positive electrode current collector layer (CL1) before the positive electrode active material layer (CL2) is applied onto the positive electrode current collector layer (CL1), and/or the second channel (CH2) is obtained by introducing a hole in the negative electrode current collector layer (AL1) before the negative electrode active material layer (AL2) is applied onto the negative electrode current collector layer (AL1).

4. The electrode assembly (EA) according to any of the previous claims, wherein the first channel (CH1) and/or the second channel (CH2) does not penetrate fully through the ion conductive layer (ICL).

5. The electrode assembly (EA) according to any of the previous claims, wherein, based on a third direction (D3),
a length (G1) of the first channel (CH1) is smaller than a distance (H1) from a surface of the positive electrode current collector layer (CL1) to a center line (T) of the ion conductive layer (ICL),
wherein the third direction (D3) is perpendicular to the positive electrode layer (CL) and the negative electrode layer (AL).

6. The electrode assembly (EA) according to any of the previous claims, wherein, based on a third direction (D3),
a length (G2) of the second channel (CH2) is smaller than a distance (H2) from a surface of the negative electrode current collector layer (AL1) to the center line (T) of the ion conductive layer (ICL),
wherein the third direction (D3) is perpendicular to the positive electrode layer (CL) and the negative electrode layer (AL).

7. The electrode assembly (EA) according to any of the previous claims, wherein, based on a third direction (D3), the first channel (CH1) and the second channel (CH2) are laterally aligned with each other,
wherein the third direction (D3) is perpendicular to the positive electrode layer (CL) and the negative electrode layer (AL).

8. The electrode assembly (EA) according to any of claims 1 to 6, wherein, based on a third direction (D3), the first channel (CH1) and the second channel (CH2) are laterally offset from each other,
wherein the third direction (D3) is perpendicular to the positive electrode layer (CL) and the negative electrode layer (AL).

9. The electrode assembly (EA) according to any one of claims 1 to 4, wherein, based on a third direction:
a length (G1) of the first channel (CH1) is larger than a distance (H1) from a surface of the positive electrode current collector layer (CL1) to a center line (T) of the ion conductive layer (ICL),
a length (G2) of the second channel (CH2) is larger than a distance (H2) from a surface of the negative electrode current collector layer (AL1) to the center line (T) of the ion conductive layer (ICL),
wherein based on a third direction (D3),the first channel (CH1) and the second channel (CH2) are laterally offset from each other, and
wherein the third direction (D3) is perpendicular to the positive electrode layer (CL) and the negative electrode layer (AL).

10. The electrode assembly (EA) according to any of the previous claims, wherein:
the first channel (CH1) has a shape that narrows in width from the positive electrode current collector layer (CL1) toward the ion conductive layer (ICL), and/or
the second channel (CH2) has a shape that narrows in width from the negative electrode current collector layer (AL1) toward the ion conductive layer (ICL).

11. The electrode assembly (EA) according to any of the previous claims, wherein the first channel (CH1) and/or the second channel (CH2) has a rectangular cross-sectional shape in a plane defined by a first direction (D1) parallel to the positive electrode layer (CL) and the negative electrode layer (AL), and a third direction (D3) perpendicular to the positive electrode layer (CL) and the negative electrode layer (AL).

12. The electrode assembly (EA) according to any of the previous claims, further comprising:
a first groove (GR1) recessed into a surface of the positive electrode current collector layer (CL1); and
a second groove (GR2) recessed into a surface of the negative electrode current collector layer (AL1),
wherein the first groove (GR1) is filled with the positive electrode active material layer (CL2), and the second groove (GR2) is filled with the negative electrode active material layer (AL2).

13. The electrode assembly (EA) according to claim 12, wherein:
the first channel (CH1) is disposed in the first groove (GR1), and/or
the second channel (CH2) is disposed in the second groove (GR2).

14. The electrode assembly (EA) according to any of claims 12 or 13, wherein:
each of the first groove (GR1) and the second groove (GR2) extends in a second direction (D2),
the first groove (GR1) comprises a plurality of first grooves, and the second groove (GR2) comprises a plurality of second grooves,
the plurality of first grooves are disposed at predetermined intervals along a first direction (D1) on the positive electrode current collector layer (CL1), and
the plurality of second grooves are disposed at predetermined intervals along the first direction (D1) on the negative electrode current collector layer (AL1),
wherein the first direction (D1) and the second direction (D2) are both parallel to the positive electrode layer (CL) and the negative electrode layer (AL), and wherein the first direction (D1) and the second direction (D2) are perpendicular to each other.

15. The electrode assembly (EA) according to any of claims 12 or 13, wherein:
the first groove (GR1) comprises a plurality of first grooves, and the second groove (GR2) comprises a plurality of second grooves,
a first lattice structure portion (LS1) is formed between the plurality of first grooves on the positive electrode current collector layer (CL1), and
a second lattice structure portion (LS2) is formed between the plurality of second grooves on the negative electrode current collector layer (AL1).
